# EUROPÄISCHE PATENTSCHRIFT

(11) **EP 0 364 757 B1**
(45) Veröffentlichungstag und Bekanntmachung des Hinweises auf die Patenterteilung: **01.12.1993**
(21) Anmeldenummer: 89117436.9
(22) Anmeldetag: 21.09.1989
(51) Int. Cl.: F16F 9/46

(54) **Stossdämpfer zur Dämpfung von Bewegungsabläufen**
Shock absorber for damping movements
Amortisseur de chocs pour l'amortissement de mouvements

(30) Priorität: 20.10.1988 DE 3835705
(43) Veröffentlichungstag der Anmeldung: 25.04.1990
(73) Patentinhaber: ROBERT BOSCH GMBH, 70442 Stuttgart (DE)
(72) Erfinder: Spiess, Ewald, Dipl.-Ing. (FH), D-7143 Vaihingen/Enz 2 (DE)

(56) Entgegenhaltungen:
- EP-A- 0 200 446
- EP-A- 0 330 634
- WO-A-85/04698
- WO-A-89/05929
- FR-A- 2 552 515

## Beschreibung

### Stand der Technik

Die Erfindung betrifft einen Stoßdämpfer zur Dämpfung von Bewegungsabläufen nach der Gattung des Hauptanspruchs. Es ist bereits ein Stoßdämpfer bekannt, dessen Dämpfungskraft mittels einer elektromagnetischen Ventileinrichtung veränderbar ist. Die Ventileinrichtung ist am Dämpferkolben angeordnet. Sie umfaßt eine Magnetspule, einen Anker und einen mit dem Anker verbundenen Steuerschieber, dessen Lage die Androsselung des zwischen den beiden Arbeitsräumen sich austauschenden Druckmediums bestimmt.

Um den Steuerschieber zu betätigen, sind relativ große Kräfte erforderlich. Diese Kräfte müssen von der Magnetspule erzeugt werden. Deshalb ist es erforderlich, eine große, schwere und nicht kostengünstige Magnetspule vorzusehen. Wegen der großen Kräfte ist es vermutlich nicht immer möglich, wie häufig gewünscht und erforderlich, kurze Schaltzeiten zu erzielen.

Bei der bekannten Lösung bestimmt die Kraft der Magnetspule die Lage des Steuerschiebers, und die Lage bestimmt wiederum eine Größe eines Drosselquerschnitts. Bei einem Stoßdämpfer mit veränderbarem Drosselquerschnitt will man jedoch primär weniger die Größe des Drosselquerschnitts steuern, sondern vielmehr die Dämpfungskraft und damit die Dämpfung von Bewegungsabläufen, welche direkt von einem Differenzdruck zwischen den beiden Arbeitsräumen abhängt. Wird der Drosselquerschnitt gesteuert, so ist die Dämpfungskraft nicht nur vom Drosselquerschnitt, sondern zusätzlich u. a. von einer Relativgeschwindigkeit zwischen dem Dämpferkolben und dem Zylinder abhängig und z. B. auch von der Viskosität des Druckmediums. Die Viskosität kann relativ stark schwanken, z. B. in Abhängigkeit von der Temperatur.

Durch die WO 85/04698 ist ein Stoßdämpfer bekannt geworden, bei dem ein zwischen zwei Arbeitsräumen des Stoßdämpfers sich austauschender Druckmedium-Strom in zwei Teilströme unterteilt wird. Ein elektromagnetisch betätigbarer Ventilkörper eines ersten Ventils steuert den ersten Teilstrom und dabei auch einen Druck in einem stromaufwärts des Ventilkörpers gelegenen Steuerraum. Ein zweites hydraulisch tätigbares Ventil beeinflußt den zweiten Teilstrom. Der Druck in dem Steuerraum steuert das zweite Ventil. Das erste Ventil und das zweite Ventil sind nur in immer der gleichen Strömungsrichtung durchströmbar. Eine Umkehrung der Strömungsrichtung durch die beiden Ventile ist nicht möglich.

Bei einem Stoßdämpfer vergrößert sich wechselweise in Abhängigkeit der Bewegungsrichtung der Kolbenstange einer der beiden Arbeitsräume und der jeweils andere Arbeitsraum wird kleiner. Dies hat zur Folge, daß das Druckmedium zwischen den beiden Arbeitsräumen hin- und herströmt.

Bei der WO 85/04698 soll der Druckmedium-Strom für beide Bewegungsrichtungen der Kolbenstange durch die beiden Ventile beeinflußt werden. Da jedoch beide Ventile nur in immer der gleichen Richtung durchströmbar sind, ist es notwendig, den gesamten zwischen den beiden Arbeitsräumen sich austauschenden Druckmedium-Strom gleichzurichten. Dazu sind vier Rückschlagventile erforderlich. Jedes dieser vier Rückschlagventile muß so bemessen sein, daß der gesamte zwischen den beiden Arbeitsräumen sich austauschende Druckmedium-Strom durch jedes der vier Rückschlagventile ohne unzulässig großen Druckverlust gelangen kann. Darum bauen diese vier Rückschlagventile und somit auch der gesamte Stoßdämpfer sehr groß. Die Größe der Rückschlagventile hat auch einen nachteiligen Einfluß auf das dynamische Verhalten des Stoßdämpfers.

Die Ventileinrichtung ist bei der genannten Bauart am Dämpferkolben angeordnet. Es sind aber auch Stoßdämpfer bekannt, bei denen eine Ventileinrichtung außerhalb des Zylinders vorgesehen ist.

### Vorteile der Erfindung

Demgegenüber weist der mit den kennzeichnenden Merkmalen des Hauptanspruchs ausgestattete Stoßdämpfer den Vorteil kleiner Baugröße und hoher Stellgeschwindigkeit auf.

Durch die in den Unteransprüchen aufgeführten Maßnahmen sind vorteilhafte Weiterbildungen und Verbesserungen des im Hauptanspruch angegebenen Stoßdämpfers möglich.

Vorteilhaft ist, daß durch das erste Einzelventil nur der erste Teilstrom des gesamten Durckmedium-Stromes fließt. Deshalb ist es möglich, das erste Einzelventil kleiner auszubilden, und zwar kleiner als wenn der gesamte Strom durch das erste Einzelventil hindurchfließen würde. Insbesondere die von der Magnetspule zu erzeugenden Kräfte sind ebenfalls vorteilhaft kleiner.

Die von der Magnetspule erzeugte Kraft steuert in vorteilhafter Weise den Druck in dem Druckraum des zweiten Einzelventils. Der Differenzdruck zwischen den beiden Arbeitsräumen und damit die Dämpfungskraft ist abhängig von dem Druck in dem Druckraum des zweiten Einzelventils. Damit wird durch Ansteuerung der Mangetspule nicht die Größe eines Drosselquerschnitts, sondern in vorteilhafter Weise direkt die Dämpfungskraft bestimmt. Die Dämpfungskraft ist somit, wie erwünscht, weitgehend unabhängig von z. B. einer Relativgeschwindigkeit zwischen dem Kolben und dem Zylinder und sie ist auch zumindest weitgehend unabhängig von der Viskosität des Druckmediums.

Besonders vorteilhaft ist, daß nur der erste Teilstrom gleichgerichtet werden muß und daß deshalb nur der erste Teilstrom durch die Rückschlagventile strömen muß, weshalb diese Rückschlagventile relativ klein ausgebildet sein können.

Vorteilhaft ist weiterhin, daß insbesondere durch Einbau und Dimensionierung von Strömungsblenden das Verhältnis erster Teilstrom zu zweitem Teilstrom in weiten Grenzen nahezu beliebig wählbar ist.

Desweiteren ist es von Vorteil, daß die Dämpfungskraft proportional einer Kraft der Magnetspule ist. Ist die Magnetspule ein Proportionalmagnet, dann ist die Dämpfungskraft in vorteilhafter Weise direkt proportional einem elektrischen Strom zur Ansteuerung der Magnetspule.

Vorteilhaft ist weiter, daß mit relativ kleiner Magnetkraft eine relativ schnelle Verstellung der Dämpfungskraft möglich ist.

Auch ist es ein Vorteil, daß mit einer relativ kleinen Magnetkraft eine relativ große Dämpfungskraft erzeugt werden kann; auch wenn gleichzeitig ein relativ großer Druckmedium-Strom gesteuert werden soll, so ist die erforderliche Magnetkraft relativ klein. Für einen verhältnismäßig großen Verstellbereich bei der Dämpfungskraft ist nur ein kleiner Verstellbereich der Magnetkraft erforderlich.

Die genannten Vorteile sind besonders deutlich, wenn die Ventileinrichtung konstruktiv so ausgebildet ist, daß der erste Teilstrom deutlich kleiner ist als der zweite Teilstrom.

### Zeichnung

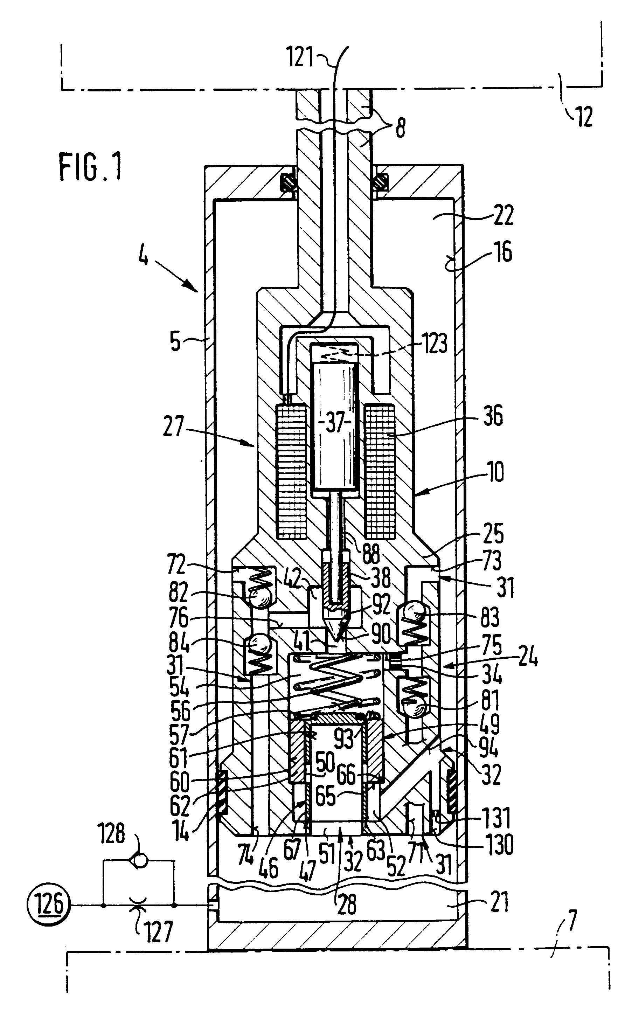

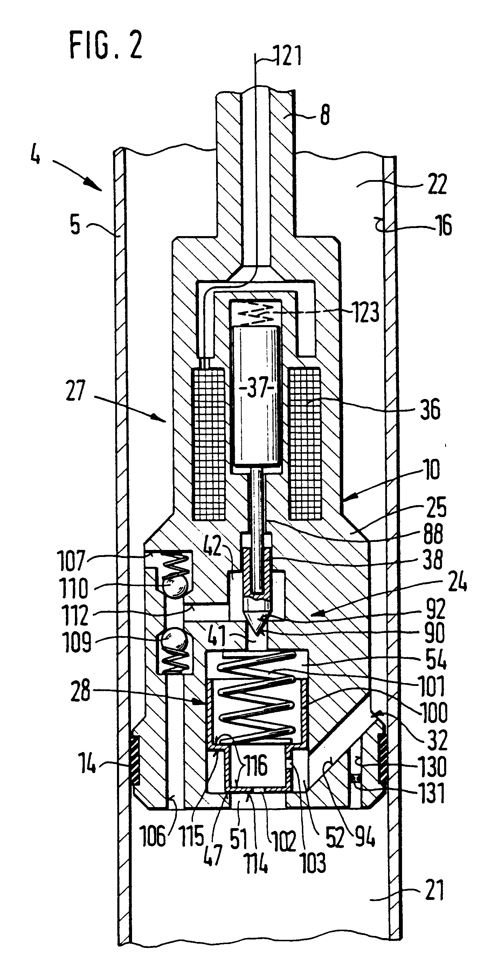

Zwei Ausführungsbeispiele der Erfindung sind in der Zeichnung vereinfacht dargestellt und in der nachfolgenden Beschreibung näher erläutert. Die Figuren 1 und 2 zeigen je ein Ausführungsbeispiel eines Stoßdämpfers.

### Beschreibung der Ausführungsbeispiele

Bei dem in der Fig. 1 dargestellten Ausführungsbespiel hat der Stoßdämpfer einen Zylinder 4 mit einem abschnittsweise dargestellten, zylindrischen Mantelrohr 5 mit zwei Stirnseiten. Die eine Stirnseite ist an einer strich-punktiert angedeuteten Fahrzeugachse 7 befestigt; auf der anderen Stirnseite des Mantelrohres 5 ragt eine Kolbenstange 8 heraus. Von der Kolbenstange 8 sind nur deren beide Enden dargestellt. Die Kolbenstange 8 ist mit einem Ende mit einem abgestuften, zylindrischen Dämpferkolben 10 verbunden und mit einem anderen Ende ist sie an einem strich-punktiert angedeuteten Fahrzeugaufbau 12 angelenkt. Der Dämpferkolben 10 kann unter Zwischenlage eines Führungsringes 14 an einer inneren Mantelfläche 16 des Mantelrohres 5 axial gleiten. Der Führungsring 14 hat gleichzeitig die Aufgabe einer Dichtung.

Ein Innenraum des Mantelrohres 5 wird durch den Dämpferkolben 10 in einen ersten Arbeitsraum 21 und in einen zweiten Arbeitsraum 22 unterteilt. In der Zeichnung befindet sich der erste Arbeitsraum 21 unterhalb und der zweite Arbeitsraum 22 oberhalb dem Dämpferkolben 10.

In den Dämpferkolben 10 ist eine ansteuerbare Ventileinrichtung 24 integriert. Die Ventileinrichtung 24 bestimmt eine Dämpfungskraft des Stoßdämpfers.

Die Ventileinrichtung 24 besteht im wesentlichen aus einem Gehäuse 25 mit einem ersten Einzelventil 27, einem zweiten Einzelventil 28, einer ersten Strömungsverbindung 31, einer zweiten Strömungsverbindung 32 und einer Engstelle 34, z.B. eine Strömungsblende 34. Beide Strömungsverbindungen 31, 32 verbinden die beiden Arbeitsräume 21, 22. Die erste Strömungsverbindung 31 führt im wesentlichen durch das erste Einzelventil 27, und die zweite Strömungsverbindung 32 führt durch das zweite Einzelventil 28. Ein zwischen den beiden Arbeitsräumen 21, 22 sich austauschender Druckmedium-Strom wird in zwei Teilströme unterteilt. Der erste Teilstrom fließt durch die erste Strömungsverbindung 31, und der zweite Teilstrom fließt durch die zweite Strömungsverbindung 32.

Das erste Einzelventil 27 besteht im wesentlichen aus einer Magnetspule 36, einem Anker 37, einem mit dem Anker 37 verbundenen oder an dem Anker 37 anliegenden Steuerkolben 38, einem ersten Druckanschluß 41 und aus einem zweiten Druckanschluß 42.

Das zweite Einzelventil 28 enthält im wesentlichen einen inneren Kolben 46, einen an dem Gehäuse 25 vorgesehenen Ventilsitz 47, einen äußeren Kolben 49, eine Ventilöffnung 50 oder mehrere Ventilöffnungen 50, eine erste Druckkammer 51, eine zweite Druckkammer 52, einen Druckraum 54, eine innere Feder 56 und eine äußere Feder 57. Die Federn 56 und 57 sind in dem Druckraum 54 vorgesehen. Der äußere Kolben 49 ist in einer Bohrung 60 des Gehäuses 25 verschiebbar angeordnet. Er hat eine rohrartige Gestalt mit einer Wandung 62 und einer Längsbohrung 61 in der der innere Kolben 46 verschiebbar geführt ist. Eine innere Feder 56 kann auf den inneren Kolben 46 wirken und dadurch eine dem Ventilsitz 47 zugewandte Stirnseite 63 des inneren Kolbens 46 in Richtung auf den Ventilsitz 47 drücken. Eine äußere Feder 57 kann auf den äußeren Kolben 49 in axialer Richtung drücken, mit dem Bestreben eine Stirnseite 65 der Wandung 62 des äußeren Kolbens 49 gegen einen Absatz 66 der Bohrung 60 zu drücken. In einer Wandung 67 des inneren Kolbens 46 sind die Ventilöffnungen 50 vorgesehen. Eine Verbindung zwischen den Druckkammern 51 und 52 kann nicht nur durch die Ventilöffnungen 50 bestehen, sondern, je nach Lage des inneren Kolbens 46, auch zwischen der Wandung 67 entlang der Stirnseite 63 des inneren Kolbens 46 und dem Ventilsitz 47. Die Verbindung durch die Ventilöffnungen 50 ist je nach Lage des äußeren Kolbens 49 relativ zu dem inneren Kolben 46 mehr oder weniger geöffnet.

Die erste Strömungsverbindung 31 führt durch die beiden Druckanschlüsse 41 und 42 des ersten Einzelventils 27 und unterteilt sich im wesentlichen in vier Kanäle 71, 72, 73, 74. Der erste Kanal 71 führt aus dem ersten Arbeitsraum 21 zu der Strömungsblende 34. Im erstem Kanal 71, zwischen dem ersten Arbeitsraum 21 und der Strömungsblende 34 ist ein erstes Rückschlagventil 81 vorgesehen. Dieses erste Rückschlagventil 81 ist so angeordnet, daß das Druckmedium nur aus dem ersten Arbeitsraum 21 in Richtung der Strömungsblende 34, aber nicht in umgekehrter Richtung strömen kann. Von der Strömungsblende 34 führt ein Zwischenkanal 75 der ersten Strömungsverbindung 31 in den Druckraum 54. Der Druckraum 54 ist mit dem ersten Druckanschluß 41 des ersten Einzelventils 27 wirkverbunden. Je nach Stellung des Steuerkolbens 38 besteht eine mehr oder weniger große Verbindung zwischen dem ersten Druckanschluß 41 und dem zweiten Druckanschluß 42. Von dem zweiten Druckanschluß 42 führt der zweite Kanal 72 der ersten Strömungsverbindung 31 in den zweiten Arbeitsraum 22. Zwischen dem zweiten Druckanschluß 42 und dem zweiten Arbeitsraum 22 ist in dem zweiten Kanal 72 ein zweites Rückschlagventil 82 angeordnet. Dieses zweite Rückschlagventil 82 ist so eingebaut, daß das Druckmedium aus dem zweiten Druckanschluß 42 in den zweiten Arbeitsraum 22 strömen kann, aber in umgekehrter Richtung ist der Weg für das Druckmedium versperrt. Der dritte Kanal 73 führt aus dem zweiten Arbeitsraum 22 zu der Strömungsblende 34. In dem dritten Kanal 73 ist zwischen dem zweiten Arbeitsraum 22 und der Strömungsblende 34 ein drittes Rückschlagventil 83 eingebaut. Dieses Rückschlagventil 83 ist so vorgesehen, daß das Druckmedium aus dem zweiten Arbeitsraum 22 in Richtung auf die Strömungsblende 34 strömen kann, aber der Weg in umgekehrter Richtung ist versperrt. In dem Ausführungsbeispiel vereinigen sich die Kanäle 71 und 73 zwischen den Rückschlagventilen 81 und 83 und führen dann gemeinsam zu der Strömungsblende 34 und durch den Zwischenkanal 75 in den Druckraum 54. Von dem zweiten Druckanschluß 42 führt ein vierter Kanal 74 in den ersten Arbeitsraum 21. In dem vierten Kanal 74 ist ein viertes Rückschlagventil 84 vorgesehen, welches das Druckmedium nur aus dem zweiten Druckanschluß 42 durch den vierten Kanal 74 in den ersten Arbeitsraum 21 strömen läßt. Stromaufwärts der beiden Rückschlagventile 82, 84 sind die beiden Kanäle 72, 74 mindestens teilweise in einem gemeinsamen Kanal 76 zusammengeführt und mit dem zweiten Druckanschluß 42 verbunden.

Der Steuerkolben 38 ist mit dem Anker 37 mehr oder weniger fest verbunden. Der Anker 37 und der Steuerkolben 38 sind in dem Gehäuse 25 axial verschiebbar gelagert. Zwischen dem Gehäuse 25 und dem Anker 37 bzw. dem Steuerkolben 38 besteht mindestens ein Spalt 88. Ein Druck in dem ersten Druckanschluß 41 kann auf eine Stirnseite 90 des Steuerkolbens 38 wirken. Der Steuerkolben 38 ist andererseits mindestens teilweise von einem in dem zweiten Druckanschluß 42 herrschenden Druck umgeben. Wegen des Spalts 88 kann der Druck in dem zweiten Druckanschluß 42 bis auf die Stirnseite 90 allseits auf die Einheit von Anker 37 und Steuerkolben 38 wirken. Eine Magnetkraft der Magnetspule 36 drückt den Anker 37 und damit den Steuerkolben 38 entgegen dem Druck in dem ersten Druckanschluß 41 in Richtung auf einen an dem Gehäuse 25 vorgesehenen Ventilsitz 92. Der Steuerkolben 38 ist in dem Ausführungsbeispiel im Bereich der Stirnseite 90 mit einer Kegelspitze versehen und zwar so, daß ein Teil der Kegelspitze in den Bereich des Druckanschlusses 41 hineinragen kann, damit der Ventilsitz 92 im Bereich der Kegelspitze abdichten kann. Die Stirnseite 90 entspricht einer zum Erzeugen einer Kraft in öffnender Richtung hydraulisch wirksamen Fläche. Je größer die Magnetkraft, desto stärker wird der Steuerkolben 38 in Richtung des Ventilsitzes 92 gedrückt. Je nach Lage des Steuerkolbens 38 relativ zu dem Ventilsitz 92 ist die Verbindung zwischen dem ersten Druckanschluß 41 und dem zweiten Druckanschluß 42 mehr oder weniger geöffnet.

Falls eine Druckdifferenz zwischen einem Druck in dem ersten Arbeitsraum 21 und einem Druck in dem zweiten Arbeitsraum 22 besteht, dann versucht das Druckmedium durch den Dämpferkolben 10 mit der Ventileinrichtung 24 von einem Arbeitsraum 21, 22 in den jeweils anderen Arbeitsraum zu gelangen. Die Druckdifferenz kann z. B. bei Relativbewegung zwischen dem Dämpferkolben 10 und dem Zylinder 4 entstehen.

Ist der Druck in dem ersten Arbeitsraum 21 größer als in dem zweiten Arbeitsraum 22, dann versucht das Druckmedium durch den ersten Kanal 71, über das erste Rückschlagventil 81, durch die Strömungsblende 34 zu dem ersten Druckanschluß 41 zu gelangen. Dadurch entsteht in dem ersten Druckanschluß 41 ein Druck, welcher gegen die Stirnseite 90 des Steuerkolbens 38 drückt. Ist die dadurch hervorgerufene Kraft größer als die Summe aus Magnetkraft plus einer durch einen Druck in dem zweiten Druckanschluß 42 hervorgerufenen Kraft, dann hebt der Steuerkolben 38 von dem Ventilsitz 92 ab, und das Druckmedium kann weiter in den zweiten Druckanschluß 42 fließen, von wo es dann durch den zweiten Kanal 72 und über das zweite Rückschlagventil 82 in den zweiten Arbeitsraum 22 strömt. Ist der Druck in dem zweiten Arbeitsraum 22 größer als in dem ersten Arbeitsraum 21, dann versucht das Druckmedium durch den dritten Kanal 73 über das dritte Rückschlagventil 83 und durch die Strömungsblende 34 zu dem ersten Druckanschluß 41 zu strömen. Der Druck in dem ersten Druckanschluß 41 erzeugt auch in diesem Fall eine der Magnetkraft entgegengerichtete Kraft, welche bestrebt ist, den Steuerkolben 38 vom Ventilsitz 92 abzuheben. Ist diese Kraft größer als die Magnetkraft plus einer durch einen Druck in dem zweiten Druckanschluß 42 hervorgerufenen Kraft, so kann das Druckmedium aus dem ersten Druckanschluß 41 in den zweiten Druckanschluß 42 und von dort durch den vierten Kanal 74 und über das vierte Rückschlagventil 84 in den ersten Arbeitsraum 21 strömen.

Unabhängig davon, ob der Druck in dem ersten Arbeitsraum 21 höher ist als der Druck in dem zweiten Arbeitsraum 22 oder ob der Druck in dem zweiten Arbeitsraum 22 höher ist als in dem ersten Arbeitsraum 21, und das Druckmedium aus dem ersten Arbeitsraum 21 durch den ersten Kanal 71 und den zweiten Kanal 72 in den zweiten Arbeitsraum 22 strömt oder ob es aus dem zweiten Arbeitsraum 22 durch den dritten Kanal 73 und den vierten Kanal 74 in den ersten Arbeitsraum strömt, so fließt es doch in beiden Fällen im Bereich des ersten Einzelventils 27 von dem ersten Druckanschluß 41 vorbei an dem Steuerkolben 38 und dem Ventilsitz 92 in den zweiten Druckanschluß 42. Dies wird bewirkt durch die Rückschlagventile 81, 82, 83, 84. Diese vier Rückschlagventile dienen somit zur Gleichrichtung der Strömung des Druckmediums im Bereich des ersten Einzelventils 27.

Der erste Druckanschluß 41 ist mit dem Druckraum 54 verbunden. In dem Druckraum 54 herrscht somit stets der gleiche Druck wie in dem ersten Druckanschluß 41. Der Druck in dem Druckraum 54 wirkt zum einen auf den inneren Kolben 46 in axialer Richtung mit dem Bestreben, diesen Kolben 46 mit seiner Stirnseite 63 gegen den Ventilsitz 47 zu drücken. Der Druck in dem Druckraum 54 wirkt aber auch auf die Wandung 62 d. h. auf eine der Stirnseite 65 gegenüberliegende Stirnfläche 93 des äußeren Kolbens 49 in axialer Richtung und hat das Bestreben, die Stirnseite 65 des äußeren Kolbens 49 gegen den Absatz 66 zu drücken.

Die zweite Strömungsverbindung 32 verbindet über das zweite Einzelventil 28 die beiden Arbeitsräume 21,22 und unterteilt sich in mehrere Abschnitte. Ausgehend vom ersten Arbeitsraum 21 kommt zuerst die erste Druckkammer 51, dann die zweite Druckkammer 52, bis dann ein Verbindungskanal 94 in den zweiten Arbeitsraum 22 führt. Zwischen der zweiten Druckkammmer 52 und dem zweiten Arbeitsraum 22 können auch mehrere parallel wirkende Verbindungskanäle 94 vorgesehen werden. Die erste Druckkammer 51 ist somit mit dem ersten Arbeitsraum 21 verbunden. Damit wirkt ein Druck in dem ersten Arbeitsraum 21 auf den inneren Kolben 46 in axialer Richtung mit dem Bestreben, diesen inneren Kolben 46 von dem Ventilsitz 47 abzuheben. Die Kraft des Druckes in dem ersten Arbeitsraum 21 ist der Kraft der Feder 56 und der Kraft des Druckes in dem Druckraum 54 entgegengerichtet. Wegen dem Verbindungskanal 94 herrscht in der zweiten Druckkammer 52 stets nahezu der gleiche Druck wie in dem zweiten Arbeitsraum 22. Der Druck in der zweiten Druckkammer 52 wirkt auf die Stirnseite 65 des äußeren Kolbens 49 in axialer Richtung mit dem Bestreben, den äußeren Kolben 49 von dem Absatz 66 abzuheben. Die Kraft der Druckes in der zweiten Druckkammer 52 auf den äußeren Kolben ist entgegengerichtet der Kraft der äußeren Feder 57 und der Kraft des Druckes in dem Druckraum 54 auf die Stirnfläche 93 des äußeren Kolbens 49.

Um einen Durchfluß des Druckmediums durch die zweite Strömungsverbindung 32 über das zweite Einzelventil 28 aus dem ersten Arbeitsraum 21 in den zweiten Arbeitsraum 22 zu ermöglichen, muß die Kraft des Druckes in der ersten Druckkammer 51 mindestens gleich groß sein wie die Kraft des Druckes in dem Druckraum 54 auf den inneren Kolben 46 plus der Kraft der inneren Feder 56. Damit das Druckmedium aus dem zweiten Arbeitsraum 22 durch die zweite Strömungsverbindung 32 und damit durch den Verbindungskanal 94 durch den zweiten Druckanschluß 52, durch das zweite Einzelventil 28, durch die Ventilöffnung 50 und durch den ersten Druckanschluß 51 in den ersten Arbeitsraum 21 strömen kann, muß die Kraft des Druckes in der zweiten Druckkammer 52 auf die Stirnseite 65 des äußeren Kolbens 49 mindestens gleich groß sein, wie die Kraft des Druckes auf die Stirnfläche 93 des äußeren Kolbens 49 in dem Druckraum 54 plus der Kraft der äußeren Feder 57. Für genaue Berechnungen sind selbstverständlich z. B. auch noch Reibungskräfte zwischen den beiden Kolben 46, 49 bzw. zwischen dem Kolben 49 und der Bohrung 60, sowie Massenträgheitskräfte und Strömungskräfte in dem Fachmann bekannter Weise zu berücksichtigen.

In der Figur 2 ist ein zweites Ausführungsbeispiel dargestellt. In den Figuren 1 und 2 sind gleiche oder gleichwirkende Teile mit denselben Bezugszeichen versehen. Der Stoßdämpfer des zweiten Ausführungsbeispiels besteht im wesentlichen aus den gleichen Teilen wie der Stoßdämpfer des ersten Ausführungsbeispiels. Das zweite Einzelventil 28 enthält in dem ersten Ausführungsbeispiel (Figur 1) zwei Kolben 46, 49 und zwei Federn 56, 57 in dem Druckraum 54. Das zweite Einzelventil 28 des zweiten Ausführungsbeispiels (Figur 2) enthält stattdessen nur einen stufenförmigen Kolben 100, im folgenden als Stufenkolben 100 bezeichnet, und in dem Druckraum 54 eine Feder 101. In dem Stufenkolben 100 sind zwei Engstellen 102 und 103, z.B. zwei Strömungsblenden 102 und 103, vorgesehen. Die Strömungsblende 102 verbindet die erste Druckkammer 51 mit dem Druckraum 54, und die zweite Strömungsblende 103 verbindet die zweite Druckkammer 52 mit dem Druckraum 54. Die Strömungsblenden 102 und 103 haben einen relativ kleinen Durchmesser. Statt den vier Kanälen 71, 72, 73, 74 der Ventileinrichtung 24 des ersten Ausführungsbeispiels (Figur 1) enthält die Ventileinrichtung 24 des zweiten Ausführungsbeispiels (Figur 2) einen ersten Kanal 106 und einen zweiten Kanal 107. Der erste Kanal 106 verbindet den zweiten Durckanschluß 42 des ersten Einzelventils 27 mit dem ersten Arbeitsraum 21. Der zweite Kanal 107 verbindet den zweiten Druckanschluß 42 mit dem zweiten Arbeitsraum 22. In dem ersten Kanal 106 ist ein erstes Rückschlagventil 109 vorgesehen. In dem zweiten Kanal 107 befindet sich ein zweites Rückschlagventil 110. Das erste Rückschlagventil 109 ist in dem ersten Kanal 106 so angeordnet, daß das Druckmedium, je nach Druckdifferenz, aus dem zweiten Druckanschluß 42 in den ersten Arbeitsraum 21 strömen kann, aber ein Strömen in umgekehrter Richtung ist nicht möglich. Das zweite Rückschlagventil 110 in dem zweiten Kanal 107 ist so eingebaut, daß, je nach Druckdifferenz, das Druckmedium aus dem zweiten Druckanschluß 42 in den zweiten Arbeitsraum 22 strömen kann, aber ein Strömen in umgekehrter Richtung ist wegen dem Rückschlagventil 110 nicht möglich. Stromaufwärts der beiden Rückschlagventile 109, 110 sind die beiden Kanäle 106, 107 einfachheitshalber mindestens teilweise in einem gemeinsamen Kanal 112 zusammengeführt und mit dem zweiten Druckanschluß 42 verbunden.

Das zweite Einzelventil 28 in dem zweiten Ausfuhrungsbeispiel (Figur 2) hat ebenfalls den Ventilsitz 47, jedoch der Absatz 66 des ersten Ausführungsbeispiels (Figur 1) ist bei dem zweiten Einzelventil 28 des zweiten Ausführungsbeispiels (Figur 2) nicht notwendig. Der Stufenkolben 100 hat eine der ersten Druckkammer 51 zugewandte Kolbenfläche 114, eine der zweiten Druckkammer 52 zugewandte Ringfläche 115 und eine dem Druckraum 54 zugewandte Kolbenfläche 116. Die Kolbenfläche 114 ist in etwa mit einer von dem Ventilsitz 47 eingeschlossenen Fläche identisch. Die Kolbenfläche 116 ist mit der maximalen Kolbenquerschnittsfläche identisch. Die Ringfläche 115 entspricht in etwa der Kolbenfläche 116 abzüglich der Kolbenfläche 114.

In dem zweiten Ausführungsbeispiel nach Figur 2 wurde die Kolbenfläche 114 halb so groß gewählt wie die Kolbenfläche 116. Somit ist die Ringfläche 115 gleich groß wie die Kolbenfläche 114. Die Strömungsblende 102 wurde gleich groß gewählt wie die Strömungsblende 103. Besteht ein Differenzdruck zwischen dem ersten Arbeitsraum 21 und dem zweiten Arbeitsraum 22, z. B. weil der Druck in dem ersten Arbeitsraum 21 höher ist als der Druck in dem zweiten Arbeitsraum 22, dann kann ein gewisser Teil des Druckmediums aus dem ersten Arbeitsraum 21, durch die erste Druckkammer 51, durch die Strömungsblende 102, durch die Strömungsblende 103, durch die zweite Druckkammer 52 und schließlich durch den Verbindungskanal 94 in den zweiten Arbeitsraum 22 strömen. An beiden Strömungsblenden 102 und 103 entsteht ein gewisser Druckabfall. Da die beiden Strömungsblenden 102, 103 gleiche Durchmesser haben, ist an beiden Strömungsblenden der Druckabfall gleich groß, und der Druck in dem Druckraum 54 ist bei geschlossenem ersten Einzelventil 27 genau dem Druck in dem ersten Arbeitsraum 21 minus dem halben Differenzdruck zwischen den beiden Arbeitsräumen 21, 22. Da die Kolbenfläche 116 gleich groß ist wie die Kolbenfläche 114 und die Ringfläche 115 zusammen, ist der Stufenkolben 100 bei geschlossenem erstem Einzelventil 27 in etwa druckausgeglichen und wird im wesentlichen nur durch die Feder 101 gegen den Ventilsitz 47 gedrückt. Das heißt, bei geschlossenem ersten Einzelventil 27 ist auch das zweite Einzelventil 28 geschlossen. Das gleiche gilt auch für den Fall, daß der Druck in dem zweiten Arbeitsraum 22 höher ist als der Druck in dem ersten Arbeitsraum 21.

Das erste Einzelventil 27 des zweiten Ausführungsbeispiels (Figur 2) ist mit dem ersten Einzelventil 27 des ersten Ausführungsbeispiels (Figur 1) identisch. Wird das erste Einzelventil 27 etwas geöffnet, dann kann von dem Druckmedium in dem Druckraum 54 etwas durch den ersten Druckanschluß 41, vorbei an der Stirnseite 90 des Steuerkolbens 38 in den zweiten Druckanschluß 42 strömen und von dort, je nach Druckdifferenz, durch einen der beiden Kanäle 106 oder 107 in einen der beiden Arbeitsräume 21 oder 22 gelangen. Durch das erste Einzelventil 27 kann der Druck in dem Druckraum 54 eingestellt und je nach Bedarf abgesenkt werden. Der Druck in dem Druckraum 54, welcher auf die Kolbenfläche 116 wirkt, und die Kraft der Feder 101 sind bestrebt, den Stufenkolben 100 in Richtung auf den Ventilsitz 47 zu drücken. Entgegengesetzt dazu sind die Drücke in der ersten Druckkammer 51 und in der zweiten Druckkammer 52 bestrebt, den Stufenkolben 100 in entgegengesetzter Richtung, und zwar weg vom Ventilsitz 47, zu verschieben. Somit kann, durch Absenken des Druckes in dem Druckraum 54, ein mehr oder weniger starkes Abheben des Stufenkolbens 100 von dem Ventilsitz 47 bewirkt werden, d. h. durch Absenken des Druckes in dem Druckraum 54 kann das zweite Einzelventil 28 mehr oder weniger geöffnet werden. Mit Öffnen des zweiten Einzelventils 28 wird auch die zweite Strömungsverbindung 32 zwischen den beiden Arbeitsräumen 21, 22 mehr oder weniger geöffnet. Die Magnetkraft der Magnetspule 36 bestimmt, wie oben beschrieben, den Druck in dem Druckraum 54. Der Druck in dem Druckraum 54 bestimmt das Öffnen der zweiten Strömungsverbindung 32. Somit kann durch die Magnetkraft die Größe der zweiten Strömungsverbindung 32 und damit die Dämpfungskraft des Stoßdämpfers bestimmt werden.

Der erfindungsgemäße Stoßdämpfer bietet u.a. folgende Vorteile: Bei dem Stoßdämpfer (Fig. 1 und 2) mit der Ventileinrichtung 24 kann durch geeignete Dimensionierung erreicht werden, daß durch die erste Strömungsverbindung 31 nur ein relativ kleiner Teil, d. h. ein kleiner erster Teilstrom des sich zwischen den beiden Arbeitsräumen 21 und 22 austauschenden Druckmediums hindurchströmt und daß der weitaus überwiegendere Teil des Druckmediums, d. h. ein großer zweiter Teilstrom durch die zweite Strömungsverbindung 32 ausgetauscht wird. Deshalb können für die Kanäle 71, 72, 73, 74, 75, 76, 106, 107 und 112 relativ kleine Querschnittsflächen gewählt werden. Auch die Rückschlagventile 81, 82, 83, 84, 109 und 110 und die beiden Druckanschlüsse 41 und 42 können relativ klein dimensioniert ausgeführt werden. Dadurch ist es möglich einen relativ kleinen Steuerkolben 38 mit einem kleinen Anker 37 zu wählen, welcher durch eine relativ kleine Magnetspule 36 betätigt wird. Weil durch das erste Einzelventil 27 nur eine relativ kleine Teilmenge, d. h. der erste Teilstrom des Druckmedium-Stromes fließt, muß der Steuerkolben 38 insgesamt nur einen relativ kleinen Weg zurücklegen können. Weil zur Betätigung des Steuerkolbens 38 nur relativ kleine Kräfte erforderlich sind und wegen dem insgesamt nur kleinen Hub ist es relativ leicht möglich, den Steuerkolben 38 relativ reaktionsschnell zu betätigen. Die Größe des ersten Teilstromes des Druckmediums, welche durch die erste Strömungsverbindung 31 und damit durch das erste Einzelventil 27 strömt, ist im wesentlichen von der Größe der Strömungsblende 34 (Figur 1) bzw. von der Größe der Strömungsblenden 102, 103 (Figur 2) abhängig. Die Strömungsblenden 34, 102, 103 können ziemlich klein gewählt werden, sollten allerdings nicht so klein gewählt werden, daß sich eventuelle Schmutzpartikel des Druckmediums in den Strömungsblenden 34, 102, 103 verfangen könnten.

In den gezeigten Ausführungsbeispielen (Figur 1 und 2) nimmt der Druck in dem Druckraum 54 mit steigender Magnetkraft zu. Ist die Magnetspule 36 ein Proportionalmagnet, dann ist der Druck in dem Druckraum 54 und damit die Dämpfungskraft direkt proportional einem Ansteuerstrom, welcher durch eine Elektroleitung 121 der Magnetspule 36 zugeführt wird.

Das erste Einzelventil 27 kann aber auch so ausgeführt sein, daß die Kraft einer in der Zeichnung nur gestrichelt angedeuteten Feder 123 auf den Anker 37 und damit auf den Steuerkolben 38 in Schließrichtung wirkt. Ist diese Feder 123 eine relativ starke Feder, dann muß in diesem Fall die Magnetkraft in Richtung Öffnen des ersten Einzelventils 27 wirken können, d. h. die Magnetspule 36 und der Anker 37 müssen dementsprechend gebaut sein. Bei dieser Ausführung wird bei einem eventuellen Defekt, z. B. bei Stromausfall, die Feder 123 den Steuerkolben 38 gegen den Ventilsitz 92 drücken, und man erhält z. B. bei einem Stromausfall die maximal mögliche Dämpfungskraft. Bei einer Ausführung ohne die Feder 123 oder bei einer die Magnetkraft nur unterstützenden relativ schwachen Feder 123 erhält man z. B. bei Stromausfall die minimale mögliche Dämpfungskraft. Je nach Anwendungsfall kann mal mehr die eine oder mal mehr die andere Ausführungsform die günstigere sein.

Beim Einfahren der Kolbenstange 8 in den Zylinder 4 wird entsprechend dem Kolbenstangen-Querschnitt ein Teil des Druckmediums aus dem Zylinder 4 verdrängt. Beim Ausfahren der Kolbenstange 8 aus dem Zylinder 4 soll in den Zylinder 4 Druckmedium nachströmen können. Zu diesem Zweck ist der erste Arbeitsraum 21 beispielhaft mit einem Speicher 126 verbunden. Damit auch bei einem relativ niedrigen Druck in dem Speicher 126 in dem ersten Arbeitsraum 21 ein relativ hoher Druck und damit eine relativ große Dämpfungskraft erzeugt werden kann, wurde zwischen dem Speicher 126 und dem Arbeitsraum 21 eine Drossel 127 eingebaut. Beim Rückströmen des Druckmediums aus dem Speicher 126 in den Arbeitsraum 21 ist die Drossel 127 nicht erforderlich, weshalb dieser Drossel 127 ein Rückschlagventil 128 parallel angeordnet wurde. Das Rückschlagventil 128 ist so eingebaut, daß das Druckmedium nur bei Fließrichtung aus dem Speicher 126 in den Arbeitsraum 21 durch das Rückschlagventil 128 strömen kann.

Damit bei Relativbewegung zwischen Dämpferkolben 10 und Mantelrohr 5 das in einem der Arbeitsräume 21, 22 verdrängte Druckmedium-Volumen gleich dem im anderen Arbeitsraum nachfließenden Volumen ist, kann eine doppelte Kolbenstange verwendet werden, die beiderseits des Dämpferkolbens 10 aus den Stirnseiten des Mantelrohres 5 herausragt. Besonders günstig ist es, wenn beide Seiten der doppelten Kolbenstange in etwa gleiche Durchmesser haben.

Als Ausführungsbeispiele (Figuren 1 und 2) wurden für den erfindungsgemäßen Stoßdämpfer zwei Einrohr-Stoßdämpfer gewählt. Dies ist jedoch nur beispielhaft. Der Stoßdämpfer könnte genau so gut z. B. ein sogenannter Zweirohr-Stoßdämpfer sein.

Für die Rückschlagventile 81, 82, 83, 84, 109, 110 gibt es mehrere bekannte Lösungen. Die Rückschlagventile bestehen in den Figuren 1 und 2 beispielhaft im wesentlichen aus je einer Feder und je einer Kugel, wobei die Kugel durch die Feder gegen eine entsprechende Stufe des Kanals, in dem das Rückschlagventil eingebaut ist, gedrückt wird.

Bei dem zweiten Ausführungsbeispiel nach der Figur 2 ist, wegen den in Reihe geschalteten Strömungsblenden 102 und 103 der Differenzdruck zwischen dem ersten Druckanschluß 41 und dem zweiten Druckanschluß 42 des ersten Einzelventils 27 stets kleiner als der Differenzdruck zwischen dem ersten Arbeitsraum 21 bzw. der ersten Druckkammer 51 und dem zweiten Arbeitsraum 22 bzw. der zweiten Druckkammer 52 des zweiten Einzelventils 28. Dies erfordert eine kleinere Magnetkraft bei gleichem Wirkquerschnitt der Stirnseite 90 des Steuerkolbens 38 gegenüber der Magnetkraft im ersten Ausführungsbeispiel nach Figur 1, weil bei diesem ersten Ausführungsbeispiel der Differenzdruck zwischen dem ersten Druckanschluß 41 und dem zweiten Druckanschluß 42 des ersten Einzelventils 27 ebenso groß sein kann wie der Differenzdruck zwischen der ersten Druckkammer 51 und der zweiten Druckkammer 52 des zweiten Einzelventils 28 und damit ebenso groß wie ein maximal zu berücksichtigender Differenzdruck zwischen den beiden Arbeitsräumen 21 und 22. Bei sonst gleichen Verhältnissen ist der Druck in dem Druckraum 54 des ersten Ausführungsbeispiels (Figur 1) größer als der Druck in dem Druckraum 54 des zweiten Ausführungsbeispiels (Figur 2). Soll in dem ersten Ausführungsbeispiel einer der beiden Kolben 46, 49 um den gleichen Betrag angehoben werden wie der Stufenkolben 100 in dem zweiten Ausführungsbeispiel, dann muß in dem Druckraum 54 des ersten Ausführungsbeispiels eine geringere Menge des Druckmediums verdrängt werden wie aus dem Druckraum 54 des zweiten Ausführungsbeispieles. Dies hat den Vorteil, daß die Ventileinrichtung 24 des ersten Ausführungsbeispiels im allgemeinen schneller reagieren kann als die Ventileinrichtung 24 des zweiten Ausführungsbeispiels. Wie oben ausgeführt, ist, bei sonst gleichen Bedingungen, der Differenzdruck an dem ersten Einzelventil 27 des ersten Ausführungsbeispiels (Figur 1) größer als der Differenzdruck an dem ersten Einzelventil 27 des zweiten Ausführungsbeispiels (Figur 2). Da sich größere Differenzdrücke relativ genauer steuern lassen, läßt sich insgesamt die Dämpfungskraft bei dem ersten Ausführungsbeispiel im allgemeinen genauer einstellen als bei dem zweiten Ausführungsbeispiel.

Wie oben ausgeführt, ist die Dämpfungskraft des Stoßdämpfers im wesentlichen von dem Druck in dem Druckraum 54 des zweiten Einzelventils 28 abhängig. Dieser Druck wird, wie ebenfalls oben ausgeführt, über das erste Einzelventil 27 geregelt mit Hilfe des der Magnetspule 36 zugeführten elektrischen Stromes. Die Dämpfungskraft ist somit weitgehend unabhängig von der Menge und der Viskosität des Druckmediums, welches zwischen den beiden Arbeitsräumen 21, 22 ausgetauscht werden soll, d. h. die Dämpfungskraft ist weitgehend unabhängig von einer Temperatur des Druckmediums und von der Geschwindigkeit mit der sich der Dämpferkolben 10 relativ zu dem Mantelrohr 5 bewegt, d. h. die Dämpfungskraft ist weitgehend unabhängig davon, ob sich die Fahrzeugachse 7 schnell oder langsam relativ zu dem Fahrzeugaufbau 12 bewegt.

Die Ventileinrichtung 24 kann, wie in den Ausführungsbeispielen anhand der Zeichnung dargestellt, innerhalb des Dämpferkolbens 10 vorgesehen sein, sie kann aber auch z. B. an einer Außenfläche des Mantelrohres 5 angeordnet sein oder aber auch in oder an einem sonstigen Trennkolben innerhalb des Zylinders.

Im ersten Ausfuhrungsbeispiel (Fig. 1) kann die hydraulisch wirksame Querschnittsfläche des inneren Kolbens 46 gleich, größer oder kleiner als die hydraulisch wirksame Querschnittsfläche der Wandung 62 des äußeren Kolbens 49 sein. Auch die Kraft der inneren Feder 56 muß nicht gleich der Kraft der äußeren Feder 57 sein.

Im zweiten Ausführungsbeispiel (Fig. 2) muß die Kolbenfläche 114 nicht gleich groß sein wie die Ringfläche 115, und die Strömungsblende 102 muß nicht gleich groß sein wie die Strömungsblende 103. Je nach Auslegung z. B. der genannten Bauteile können in vorteilhafter Weise die Eigenschaften des Stoßdämpfers in weiten Grenzen beliebig gestaltet werden. Der Stoßdämpfer kann z. B. so gebaut sein, daß, gleiche Ansteuerung der Magnetspule 36 vorausgesetzt, die Dämpfungskraft in die eine Bewegungsrichtung ungleich oder gleich der Dämpfungskraft in der anderen Bewegungsrichtung ist.

Die erzielbare Dämpfungskraft wird durch die einstellbare Magnetkraft bestimmt, denn wenn die Druckkraft auf die Stirnseite 90 des Steuerkolbens 38 größer ist als die Magnetkraft, dann öffnet das erste Einzelventil 27, so daß der Druck in der Druckkammer 54 nicht weiter ansteigen kann, wodurch auch das zweite Einzelventil 28 gerade so weit öffnen kann, daß die Dämpfungskraft gerade den gewünschten Wert hat, weitgehend unabhängig von z. B. der Relativgeschwindigkeit zwischen dem Mantelrohr 5 und dem Dämpferkolben 10, aber auch unabhängig von der Viskosität des Druckmediums. Die maximale Dämpfungskraft wird durch die maximal erzeugbare Magnetkraft bestimmt und kann auch im ungünstigsten Fall nie überschritten werden.

Für den Fall, daß die in schließender Richtung wirkende Feder 123 vorgesehen ist und die Magnetkraft in öffnender Richtung wirkt, wird die maximale Dämpfungskraft durch die Kraft der Feder 123 bestimmt.

In dem Gehäuse 25 können bei Bedarf die Arbeitsräume 21, 22 über weitere Aussparungen 130, ggf. mit Strömungsblenden 131, verbunden sein, z. B. zur Erzeugung einer gewissen Grund-Dämpfungskraft. Diese Aussparungen dürften wegen der Vielseitigkeit der Ventileinrichtung 24 jedoch eher entbehrlich sein.

Durch Wahl insbesondere der Größe der Stirnseite 90 des Steuerkolbens 38, der Strömungsblende 34, der Stirnseite 65 des äußeren Kolbens 49 und der Querschnittsfläche des inneren Kolbens 46 bzw. der Strömungsblenden 102, 103, der Kolbenflächen 114, 116 und der Ringfläche 115, kann das Verhältnis der zu erzeugenden Magnetkraft zur Dämpfungskraft, bei gefordertem Druckmedium-Strom, in vorteilhafter Weise in weiten Grenzen nahezu beliebig abgestimmt werden.

## Patentansprüche

1. Stoßdämpfer zur Dämpfung von Bewegungsabläufen von zwei sich relativ zueinander mit veränderbaren Geschwindigkeiten bewegender Massen, mit einem in einem Zylinder verschiebbaren, diesen in einen ersten und in einen zweiten Arbeitsraum unterteilenden Dämpferkolben, wobei der Zylinder und der Dämpferkolben mit jeweils einer der Massen verbunden sind und mit mindestens einer, einen Strom eines Druckmediums aus einem der beiden Arbeitsräume in den jeweils anderen Arbeitsraum beeinflussende, mit Steuersignalen ansteuerbare ein erstes Einzelventil (27) und ein zweites Einzelventil (28) umfassenden Ventileinrichtung, wobei der zwischen den beiden Arbeitsräumen (21, 22) sich austauschende Druckmedium-Strom in einen durch eine erste Strömungsverbindung (31) strömenden und durch das erste Einzelventil (27) beeinflußbaren ersten Teilstrom und in einen durch eine zweite Strömungsverbindung (32) strömenden und durch das zweite Einzelventil (28) beeinflußbaren zweiten Teilstrom unterteilt wird, wobei die beiden Strömungsverbindungen (31, 32) mindestens teilweise getrennt verlaufen und das erste Einzelventil (27) einen in Abhängigkeit der Steuersignale gegen einen Ventilsitz (92) betätigbaren, den ersten Teilstrom androsselnden Ventilkörper (38) umfaßt, mit mindestens zwei zur Gleichrichtung der Strömung des Druckmediums im Bereich des ersten Einzelventils dienenden, das Strömen des ersten Teilstroms aus Richtung eines stromaufwärts vom Ventilkörper (38) gelegenen ersten Druckanschlusses (41) in Richtung eines stromabwärts vom Ventilkörper (38) gelegenen zweiten Druckanschlusses (42) gestattenden Rückschlagventilen (81, 82, 83, 84, 109, 110), wobei das zweite Einzelventil (28) mindestens einen Ventilkolben (46, 49, 100) und einen mit dem ersten Druckanschluß (41) verbundenen Druckraum (54) umfaßt, wobei der in dem Druckraum (54) herrschende Druck durch Beaufschlagung des mindestens einen Ventilkolbens (46, 49, 100) das zweite Einzelventil (28) steuert, dadurch gekennzeichnet, daß der Druck in dem Druckraum (54) mindestens einen der Ventilkolben (46, 49, 100) in schließender Richtung gegen einen Ventilsitz (47) treibt, ferner, daß bei entgegengerichteten Strömungsrichtungen durch das zweite Einzelventil in beiden Strömungsrichtungen der anströmseitige, höhere Druck auf den mindestens einen Ventilkolben (46, 49, 100) in öffnender Richtung wirkt und daß das zweite Einzelventil (28) wechselweise in entgegengesetzten Strömungsrichtungen durchströmt ist.

2. Stoßdämpfer nach Anspruch 1, dadurch gekennzeichnet, daß mindestens einer der Kolben (46, 49, 100) in Hubrichtung der Kraft einer Feder (56, 57, 101) ausgesetzt ist.

3. Stoßdämpfer nach einem der Ansprüche 1 oder 2, dadurch gekennzeichnet, daß der Ventilkörper (38) durch eine Magnetspule (36) betätigbar ist.

4. Stoßdämpfer nach einem der Ansprüche 1 bis 3, dadurch gekennzeichnet, daß die Ventileinrichtung (24) mindestens eine Engstelle (34, 102, 103) enthält.

5. Stoßdämpfer nach einem der Ansprüche 1 bis 4, dadurch gekennzeichnet, daß der erste Teilstrom kleiner ist als der zweite Teilstrom.

6. Stoßdämpfer nach einem der Ansprüche 1 bis 5, dadurch gekennzeichnet, daß die Ventileinrichtung (24) im Dämpferkolben (10) vorgesehen ist.

7. Stoßdämpfer nach einem der Ansprüche 1 bis 5, dadurch gekennzeichnet, daß die Ventileinrichtung (24) an einer Außenfläche des Mantelrohres (5) vorgesehen ist.

## Claims

1. Shock absorber for damping movement cycles of two masses moving at variable speeds relative to one another, comprising a shock absorber piston slidable in a cylinder and subdividing the latter into a first and a second working chamber, the cylinder and the shock absorber piston each being connected to one of the masses, and comprising at least one valve device which controls a flow of a pressure medium out of one of the two working chambers into the respective other working chamber and which can be actuated by control signals and comprises a first individual valve (27) and a second individual valve (28), wherein the pressure medium flow interchanging between the two working chambers (21, 22) is divided into a first partial flow which flows through a first flow connection (31) and can be controlled by the first individual valve (27), and into a second partial flow which flows through a second flow connection (32) and can be controlled by the second individual valve (28), the two flow connections (31, 32) extending at least in part separately and the first individual valve (27) comprising a valve body (38) which can be actuated against a valve seat (92) in dependence on the control signals and which throttles the first partial flow; said shock absorber further comprising at least two nonreturn valves (81, 82, 83, 84, 109, 110), which serve to produce a unidirectional flow of the pressure medium in the region of the first individual valve and which permit the flowing of the first partial flow from the direction of a first pressure connection (41) disposed upstream of the valve body (38) in the direction of a second pressure connection (42) disposed downstream of the valve body (38), said second individual valve (28) comprising at least one valve piston (46, 49, 100) and a pressure space (54) which is connected to the first pressure connection (41), and the pressure prevailing in the pressure space (54) controlling the second individual valve (28) by acting on the at least one valve piston (46, 49, 100), characterised in that the pressure in the pressure space (54) drives at least one of the valve pistons (46, 49, 100) in the closing direction against a valve seat (47), and further in that with opposite directions of flow through the second individual valve in both directions of flow the higher pressure on the approach flow side acts in the opening direction on the at least one valve piston (46, 49, 100), and in that the flow passes through the second individual valve (28) alternately in opposite directions of flow.

2. Shock absorber according to Claim 1, characterised in that at least one of the pistons (46, 49, 100) is subjected to the force of a spring (56, 57, 101) in the lifting direction.

3. Shock absorber according to one of Claims 1 or 2, characterised in that the valve body (38) can be actuated by a magnet coil (36).

4. Shock absorber according to one of Claims 1 to 3, chracterised in that the valve device (24) contains at least one constriction (34, 102, 103).

5. Shock absorber according to one of Claims 1 to 4, characterised in that the first partial flow is smaller than the second partial flow.

6. Shock absorber according to one of Claims 1 to 5, characterised in that the valve device (24) is disposed in the shock absorber piston (10).

7. Shock absorber according to one of Claims 1 to 5, characterised in that the valve device (24) is disposed on an outside surface of the casing tube (5).

## Revendications

1. Amortisseur de chocs pour amortir des processus de déplacement de deux masses se déplaçant l'une par rapport à l'autre avec des vitesses susceptibles d'être modifiées, avec un piston amortisseur susceptible de coulisser dans un cylindre, et le subdivisant en une première et une deuxième chambre de travail, tandis que le cylindre et le piston amortisseur sont chacun reliés à l'une des masses, et avec au moins un dispositif de soupapes influençant un courant d'un fluide sous pression de l'une des deux chambres de travail dans l'autre, susceptible d'être commandé par des signaux de commande et comprenant une première soupape individuelle (27) et une seconde soupape individuelle (28), tandis que le courant de fluide sous pression s'échangeant entre les deux chambres de travail (21, 22) est subdivisé en un premier courant partiel s'écoulant par une première liaison d'écoulement (31) et susceptible d'être influencé par la première soupape individuelle (27) et en un second courant partiel s'écoutant par une seconde liaison d'écoulement (32) et susceptible d'être influencé par la seconde soupape individuelle (28), cependant que les deux liaisons d'écoulement (31, 32) s'étendent au moins de façon partielle séparément, tandis que la première soupape individuelle (27) comprend un corps de soupape (38) susceptible d'être actionné par rapport à un siège de soupape (92), en fonction des signaux de commande, en étranglant le premier courant partiel, et avec au moins deux soupapes de retenue (81, 82, 83, 84, 109, 110) servant à redresser l'écoulement du fluide sous pression dans la zone de la première soupape individuelle, en permettant l'écoulement du premier courant partiel à partir de la direction d'un premier raccord de refoulement (41) placé en amont du corps de soupape (38) dans la direction d'un second raccord de refoulement (42) placé en aval du corps de soupape (38), tandis que la seconde soupape individuelle (28) comprend au moins un piston de soupape (46, 49, 100) et une chambre de pression (54) reliée au premier raccord de refoulement (41), et la pression régnant dans la chambre de pression (54) commande la seconde soupape individuelle (28) en sollicitant au moins un des pistons (46, 49, 100), caractérisé en ce que la pression dans la chambre de pression (54) entraîne au moins un des pistons de soupapes (46, 49, 100) dans le sens de la fermeture contre un siège de soupape (47), en ce qu'en outre, dans le cas de deux sens d'écoulement opposés à travers la seconde soupape individuelle, dans les deux directions d'écoulement, la pression côté arrivée, la plus élevée, agit dans le sens de l'ouverture sur au moins un piston (46, 49, 100) et en ce que la seconde soupape individuelle (28) est traversée alternativement par le courant dans des sens d'écoulement opposés.

2. Amortisseur de chocs selon la revendication 1, caractérisé en ce qu'au moins un des pistons (46, 49, 100) est, dans le sens du soulèvement, soumis à l'action d'un ressort (56, 57, 101).

3. Amortisseur de chocs selon une des revendications 1 ou 2, caractérisé en ce que le corps de soupape (38) est susceptible d'être actionné par une bobine magnétique (36).

4. Amortisseur de chocs selon une des revendications 1 à 3, caractérisé en ce que le dispositif de soupapes (24) comprend au moins un point d'étranglement (34, 102, 103).

5. Amortisseur de chocs selon une des revendications 1 à 4, caractérisé en ce que le premier courant partiel est plus petit que le second courant partiel.

6. Amortisseur de chocs selon une des revendications 1 à 5, caractérisé en ce que le dispositif de soupapes (24) est prévu dans le piston amortisseur (10).

7. Amortisseur de chocs selon une des revendications 1 à 5, caractérisé en ce que le dispositif de soupapes (24) est prévu contre une surface externe du tube enveloppe (5).
